# EUROPEAN PATENT APPLICATION

(11) **EP 2 056 526 A1**
(43) Date of publication of application: **06.05.2009**
(21) Application number: 07816988.5
(22) Date of filing: 26.09.2007
(51) Int. Cl.: H04L 12/24, H04L 12/56, H04L 29/06

(54) **A METHOD FOR PROCESSING THE RESOURCE INFORMATION OF THE TRAFFIC ENGINEERING LINK**

(30) Priority: 26.09.2006 CN 200610152321
(71) Applicant: Huawei Technologies Co., Ltd., Longgang District, Shenzhen Guangdong 518129 (CN)
(72) Inventor: GAO, Jianhua, Guangdong 518129 (CN)
(74) Representative: Haley, Stephen
(86) International application number: PCT/CN2007/070797
(87) International publication number: WO 2008/040253

(57) **Abstract**

A method for processing Traffic Engineering (TE) link resource information includes: obtaining a variety of protection attributes possessed by a TE link and bandwidth resource information of the protection attributes; and distributing the obtained protection attributes possessed by the TE link and the bandwidth resource information of the protection attributes in the network. With embodiments of the present invention, all network nodes can obtain TE link resource information of the whole network, and the control plane is compatible with various protection switching techniques of the transport plane.

## Description

### Field of the Invention

The present invention relates to the field of network communication, and particularly, to a method for processing traffic engineering link resource information.

### Background of the Invention

With the development of the Generalized Multi-Protocol Label Switching (GMPLS) or Multi-Protocol Label Switching (MPLS) technology defined by the standardization organization of the Internet Engineering Task Force (IETF), the function of automatic end-to-end routing may be implemented for a user service by adding a control plane into a transport network on the basis of the Packet-Switch Capable (PSC) or Time Division Multiplex (TDM).

In the control plane, a node distributes Traffic Engineering (TE) link state information acquired by the node in the network with a routing protocol, and receives real time TE link state information sent from other network nodes in the network. Eventually, each node in the transport network may acquire a copy of "network map" describing the network topology information of the whole transport network. The "network map" includes information such as information of nodes, links and resources. When requested by a user equipment or a management system for establishing a Label Switched Path (LSP) connection, a node in the transport network may acquire a feasible path by using the information included in the above "network map" and a certain routing algorithm. Then, the node drives nodes on the path till the destination node via a signaling protocol to establish the LSP connection. Therefore, the LSP connection is dynamically established. When the resources of the link are changed caused by dynamic establishment, remove and failure, the corresponding optical network node needs to distribute the renewed information of node and TE link resource in time to synchronously update the "network map".

For the case that where there are a large number of parallel link connections between two network nodes, these parallel links may be bounded to form a single TE link by using the Link Management Protocol (LMP) technique to lighten the burden of a routing protocol broadcasting the link state.

To improve the reliability of a user service transported in the transport network, multiple protection technologies are adopted in existing transport networks. For example, linear multiplex section and multiplex section ring protection technologies are largely adopted in the existing Synchronous Digital Hierarchy (SDH) / Synchronous Optical Network (SONET) network, and technologies such as the Resilient Packet Ring (RPR) technology on the basis of share protection is adopted to protect link resources in a packet transport network. In the above linear multiplex section, multiplex section ring protection and RPR technologies, partial of physical resources of one or more ring shaped or line shaped links are used to protect the other of the physical resources of the ring shaped or line shaped links. Resources on different sections of the same TE link have different protection attributes.

The GMPLS or MPLS provide some protection attributes for processing TE links. For example, Extra Service, Unprotected, Shared, Dedicated 1:1, Dedicated 1+1 and Enhanced, are provided. Moreover, the Open Shortest Path First (OSPF) based sub-Type/Length/Value (sub-TLV) and the corresponding coding value of the sub-TLV are defined. However, the resources of different sections on the TE link of the existing linear multiplex section, multiplex section ring and RPR ring have different protection attributes. Therefore, the above TE link cannot be simply classified into the link with any of the protection attributes.

When the linear multiplex section protection and multiplex section ring protection are configured in the transport network on the basis of SDH/SONET or Optical Transport Network (OTN), or the RPR ring protection is configured in the transport network on the basis of packet switching, the resources of different sections on the TE link of the linear multiplex section, multiplex section ring or RPR ring have different protection attributes. A conventional processing method is taking the section resources with the same protection attribute out to form a TE link with a simple protection attribute. In this way, a TE link on the linear multiplex section, multiplex section ring, or RPR ring will be split into a plurality of new TE links each with different protection attributes, and these new TE links with a single protection attribute are broadcast in the network.

In the processes of the present invention, the inventor finds that the conventional method mentioned above has the following problems.
1. When a TE link is split into a plurality of TE links, the number of TE links and information flooded are increased. The burden of Data Communication Network (DCN) and the burden of information processing of network nodes information processing are increased.
2. The configuration information of multiplex section or RPR ring cannot be dynamically configured, modified or deleted. The reason is that the number and types of TE links between two nodes will be changed a lot after configuring, modifying or deleting the configuration information of the multiplex section or RPR ring. For example, if configuration information of an existing two-fiber multiplex section ring is manually deleted, the existing two TE links (one with protection attribute and the other with an extra service protection attribute) will not exist according to the implementation technique corresponding to the method. The corresponding TE link resources will form a new TE link without protection attribute. If an LSP has been established with the protected resources in the original multiplex section ring, it is likely that services on the LSP may be broken due to the change of TE link information.

### Summary

The present invention is to provide a method for processing TE link resource information, so that all network nodes can obtain TE link resource information of the whole network, and a control plane can be fully compatible with various protection switching techniques of a transport plane.

The present invention is achieved with the following technical scheme.

A method for processing TE link resource information includes:
obtaining, by a network node, a variety of protection attributes possessed by a TE link and bandwidth resource information of the protection attributes; and
distributing, by the network node, the obtained protection attributes possessed by the TE link and the bandwidth resource information of the protection attributes in the network.

A network node inlcudes:
an information acquirement module, configured to obtain a variety of protection attributes possessed by a TE link and bandwidth resource information of the protection attributes; and
an information publication module, configured to distribute the protection attributes possessed by the TE link and the bandwidth resource information of the protection attributes which are both received from the information acquirement module in the network.

It can be seen from the solution provided by the present invention that a variety of protection attributes possessed by a relevant TE link is obtained by a network node, and the resource information of a variety of protection attributes of the TE link is bound together and distributed in the network. Compared with the conventonal method, the present invention has the following advantages:
1. TE link resource information of TE links in the whole network can be obtained by all netwoek nodes of the GMPLS network or MPLS network, and the control plane can be fully compatible with various protection switching techniques of the transpot plane, such as the linear multiplex section protection and multiplex section ring protection in the SDH/SONET/OTN optical transport network, or transport plane protection techniques, such as RPR ring protection in the packet switching network.
2. The GMPLS or MPLS network can flexibly handle a failure in a TE link configured with protection techniques, and failed nodes can effectively update the relevant TE link protection type and protection bandwidth information and distribute the updated TE link resource information in the network.
3. The GMPLS or MPLS network can support the protection technique of dynamically configuring the network, so that the flexibility of network protection configuration is enhanced.

### Brief Description of the Drawings

Figure 1 is a flowchart illustrating the processing of a method according to an embodiment of the present invention;
Figure 2 is a schematic diagram illustrating the structure of a two-fiber bidirectional multiplex section ring configuration network according to a first embodiment of the present invention;
Figure 3 is a schematic diagram illustrating the structure of a four-fiber bidirectional multiplex section ring configuration network according a second embodiment of the present invention; and
Figure 4 is a schematic diagram illustrating a network whose protection configuration is changed according to the second embodiment of the present invention.

### Detailed Description of the Invention

The present invention provides a method for processing TE link resource information. In a transport network configured with various protection techniques, network nodes acquire a variety of protection attributes possessed by a relevant TE link, bind the resource information of the protection attributes of the TE link together, and distribute the resource information in the network. The transport network establishes LSP connections by using information distributed by all network nodes.

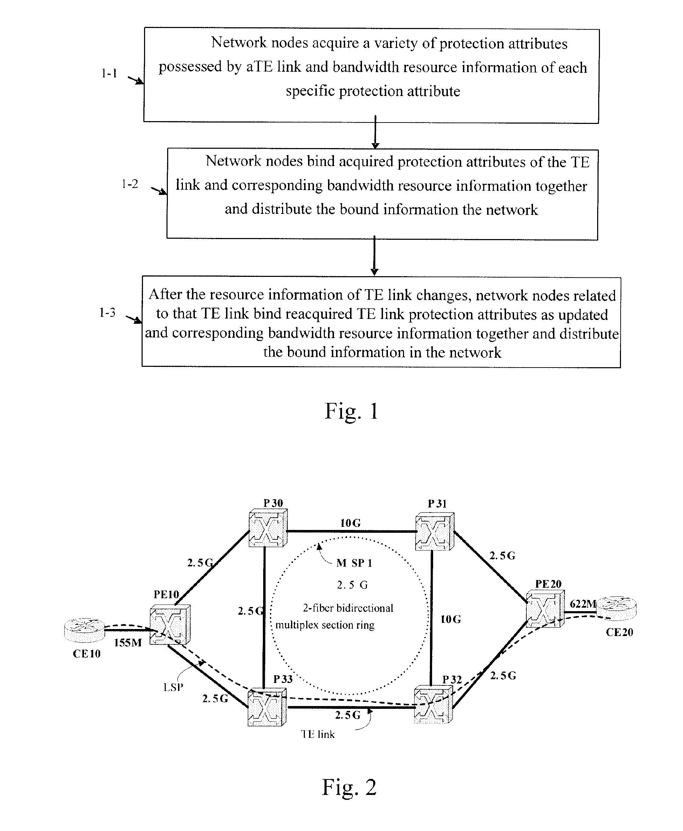

The present invention is hereinafter described in detail with reference to the accompanying drawings. As shown in Figure 1, the processing procedure of a method in accordance with the present invention is described as follows.

Block 1-1: A Network node acquires a variety of protection attributes possessed by a TE link and bandwidth resource information of each specific protection attribute.

A variety of specific protection techniques on TE links between two or more than two nodes in the network are configured in the GMPLS or MPLS network usually configures according to actual demand for protection. F or example, linear multiplex section protection or 2/4-fiber bidirectional multiplex section ring protection on TE links among a group of nodes in an optical transport network on the basis of SDH/SONET/OTN, or RPR ring protection is configured in a network on the basis of packet switching.

After the above specific protection techniques are configured, the TE links among the network nodes configured with the specific protection techniques possesses a variety of protection attributes. Therefore, the above network node may, according to the information configured, acquire the protection attributes possessed by the TE links among the network nodes and bandwidth resource information of each protection attribute.

Block 1-2: The network node binds the acquired protection attributes of the TE links and the corresponding resource information together and distributes them in the network.

After acquiring a variety of protection attributes of the above TE links and the corresponding resource information, the network node binds all acquired information together, and then distributes the bound one to the other nodes in the network, or Path Computation Elements (PCE). Therefore, network nodes in the network or PCEs can acquire TE link resource information of the whole network according to the received information distributed by other network nodes, and establish LSP connections according to the TE link resource information of the whole network.

Block 1-3: When the TE link resource information changes, network nodes related to that TE link will bind a variety of updated protection attributes of the TE link and the corresponding resource information required together, and distribute then in the network.

When some resources of a TE link in the GMPLS or MPLS network are used for bearing specific services, network nodes related to the TE link update the left bandwidth resource information of the TE link, and distribute the updated bandwidth resource information of the TE link to other nodes in the network, or PCEs according to the use of the bandwidth resources of the TE links. The transport network may establish LSP connections with the updated bandwidth resource information of the TE link.

When the transport network failures, affected network nodes update the information of protection types of corresponding TE links and the corresponding left bandwidth resource information according to the failure. For example, when a TE link in the multiplex section ring or linear multiplex section configured in the network is interrupted, all network nodes related to the multiplex section protection can determine the failed multiplex section according to the protection switching techniques of the transport plane and update the protection types and left bandwidth value of the affected TE links.

For example, when a two-fiber bidirectional multiplex section ring fails, resources of all TE links on the multiplex section ring become unprotected link resources, protected resources already existing before the occurrence of the failure and resources capable of bearing extra services become zero because of the failure. After acquiring protection attributes and bandwidth information of some or all updated resources of the TE links, the network nodes with the protection configuration distribute the updated TE link resource information in the network. The transport network may establish LSP connections with the updated TE link resource information.

For a network in normal operation, if the protection technique is reconfigured among a group of nodes in the network, network nodes related to reconfigured protection technique acquire some or all updated resources of the TE link, and distribute the updated TE link resource information in the network. The transport network may establish LSP connections with the updated TE link resource information.

For example, when a multiplex section ring protection is dynamically added or deleted among a group of network nodes in normal operation via Network Management System (NMS), nodes on the added multiplex section ring may learn that protection attributes of partial or all of TE link resources between themselves and adjacent nodes on the multiplex section ring change from the original unprotected resources to resources with one half being protected in 1:1, and the other half of resources can used for bearing resources of extra services. For deleting the configuration of an existing multiplex section ring, nodes on the deleted multiplex section ring can learn that the protection attributes of part or all TE link resources between themselves and adjacent nodes on the ring have all changed to unprotected resources from the recourses with one half being protected in 1:1 way and the other half being resources that are capable of bearing extra services.

The present invention provides the first embodiment of a two-fiber bidirectional multiplex section ring protection configuration according to the method described in the present invention. Th e structure of the two-fiber bidirectional multiplex section ring configuration network in the first embodiment is shown in Figure 2.

In the network shown in Figure 2, the transport network consists of PE10, PE20, P30, P31, P32 and P33. CE10 and CE20 are client equipment of the transport network. In the transport network, 2.5G (i.e., 16*VC4) rate class bidirectional multiplex section rings are respectively configured between nodes P30 andP31, P32 and P33. The physical links of the transport network internal nodes are so configured as: 2.5G SDH link between PE10 and P30; 10G SDH link between P30 and P31 (i.e., 64*VC4); 10G SDH link between P31 and P32; 2.5G SDH link between P33 and P32; 2.5G SDH link between PE20 and P31 and 2.5G SDH link between PE20 and P32.

In the transport network shown in Figure 2, in the initialization processes of nodes in the transport network, the nodes on the multiplex section ring determine information of various protection attributes possessed by the TE links between the nodes and adjacent nodes on the multiplex section ring.

For example, node P30 may determine that the TE link between it and node P31 simultaneously possesses three types of protection attribute information: 1:1 protected link resource bandwidth as 8*VC4 (or 8*155M, where the bandwidth of each VC4 class is fixed as 155M b/s); link resource bandwidth capable of bearing extra services as 8*VC4; unprotected link resource bandwidth as 48*VC4.

The TE link resource between a node keeping out of the multiplex section ring and other nodes in the network has single protection attribute information.

For example, node PE10 may determine that the TE link between it and node P30 is that that unprotected link resource bandwidth is 16*VC4.

After the node in the network acquires the TE link resource information between other nodes in the network, the TE link information with a variety of protection attributes which is acquired by this node is bound together in a mode shown in the following table 1 via a routing protocol. Table 1 contains the TE LINK ID and all varieties of protection attribute information possessed by a TE link.

**Table 1: Bound information in the first embodiment**

| LINK ID |
|---|
| left bandwidth/overall bandwidth resource (Mb/s) with enhanced protection attribute |
| left bandwidth/overall bandwidth resource (Mb/s) with 1+1 protection attribute |
| left bandwidth/overall bandwidth resource (Mb/s) with 1:1 protection attribute |
| left bandwidth/overall bandwidth resource (Mb/s) with M:N share protection attribute |
| left bandwidth/overall bandwidth resource (Mb/s) with unprotected attribute |
| left bandwidth/overall bandwidth resource (Mb/s) capable of bearing extra services |
| ............. |

Then, nodes in the network issue the bound information shown in table 1 to other nodes or PCH nodes in the network. After information of TE links among all network nodes is distributed, a TE link resource information table of the whole network as shown in the following table 2 is formed in each of all nodes or PCE nodes in the transport network.

Table 2 is a TE link resource information table of the whole network according to the first embodiment.

| LINK ID | TE link protection resource type | overall bandwidth value | left bandwidth value |
|---|---|---|---|
| PE10-P30 | unprotected resources | 16*VC4(or16*155M) | 16*VC4 |
| PE10-P33 | unprotected resources | 16*VC4 | 16*VC4 |
| P30-P33 | 1:1 protected resources | 8*VC4 | 8*VC4 |
| | extra service resources | 8*VC4 | 8*VC4 |
| P30-P31 | 1:1 protected resources | 8*VC4 | 8*VC4 |
| | extra service resources | 8*VC4 | 8*VC4 |
| | unprotected resources | 48*VC4 | 48*VC4 |
| P31-P32 | 1:1 protected resources | 8*VC4 | 8*VC4 |
| | extra service resources | 8*VC4 | 8*VC4 |
| | unprotected resources | 48*VC4 | 48*VC4 |
| P32-P33 | 1:1 protected resources | 8*VC4 | 8*VC4 |
| | extra service resources | 8*VC4 | 8*VC4 |
| PE20-P31 | unprotected resources | 16*VC4 | 16*VC4 |
| PE20-P32 | unprotected resources | 16*VC4 | 16*VC4 |

On the receipt of an LSP connection establish request with a certain protection attribute, a network node determines an LSP path between a corresponding source node and a destination node according to the information contained in the locally saved TE link resource information table of the whole network as shown in table 2. Alternatively, the network node requests an LSP path between a corresponding source node and destination node from a PCE according to the received LSP connection establishment request, and the PCE node determines the LSP path between the corresponding source node and destination node, and sends the information of the determined LSP path to the network node according to information contained in the locally saved TE link resource information table of the whole network as shown in table 2. That network node establishes an LSP path between the source node and destination node with the corresponding bandwidth and protection attribute via a singling process according to the information of the LSP path sent from the PCE.

For example, in the network shown in Figure 2, on the receipt of a request for establishing a connection of 155M (1*VC4) in bandwidth between PE10 and PE20 via a multiple section ring is received, node PE10 figures out an LSP path using the locally saved TE link resource information table of the whole network as shown in table 2, or finally obtains information of an LSP path via a singling process by requesting from a PCE node. The LSP path which is finally determined and established is the LSP node passing PE10, P33, P32 and PE20. P33 and P32 are nodes on a multiplex section ring.

When a partial of TE link resources in the network are used for bearing a particular service, a network node updates the corresponding left TE link resource information according to the use of the bandwidth resources in practical. For example, in the network shown in Figure 2, after the above LSP path via PE10, P33, P32 and PE20 is established, the corresponding resource information of the TE link through which the LSP path goes is changed. For example, the unprotected left bandwidth resources in the TE link resources with the link between PE10 and P33 become 15*VC4, the 1:1 protected left bandwidth resources in the TE link resources with the like between P32 and P33 become 7*VC4, and the unprotected left bandwidth resources in the TE link resources with the link between PE20 and P32 become 15*VC4. Therefore, after the TE link resource information of PE10-P33-P32-PE20 through which the LSP path passes is changed, nodes PE10, P33, P32 and PE20 distribute the acquired left bandwidth resource information of the TE link as updated to other nodes or PCE nodes in the network. Finally, a new service-borne TE link resource information table is formed in all nodes or PCE nodes in the network.

When a TE link between a group of network nodes in the transport network with a network protection configuration made fails, this group of network nodes corresponding to the network protection configuration can perceive the existence of the failure, and relevant network nodes update the protection type of the TE link which is related to the network protection configuration and the corresponding bandwidth resource information according to the situation of the failure.

For example, in the network shown in Figure 2, when the TE link from P30 to P31 between network nodes P30 and P31 is interrupted, MSP 1 fails because configured multiplex section ring goes through the TE link. All nodes P30, P31, P32 and P33 traversed by MSP 1 can perceive the failure in MSP 1. The nodes on multiplex section ring MSP 1 determines that the resource type of all TE links related to the multiplex section ring becomes unprotected link resource type according to the present failure, and determines that the protected resources already existing prior to the failure and extra service bearable resources convert the relevant bandwidth resources into zero due to the affect of the failure.

When a TE link between P30 and P31 is broken, nodes P30, P31, P32 and P33 traversed by ring MSP 1 can immediately perceive that MSP 1 fails.

Nodes P30 and P31 determines that the information update related to the relevant TE link P30-P31 is: 1:1 protected overall bandwidth resources and left bandwidth resources as 0, and the unprotected overall bandwidth resources and left bandwidth resources capable of bearing extra service all becoming 8*VC4 (the original unprotected bandwidth resources of 48*VC4 in bandwidth on the TE link becoming unavailable due to the broken of the TE link).

Nodes P31 and P32 determines that the information update related to the relevant TE link P31-P32 is: 1:1 protected overall bandwidth resources and left bandwidth resources as 0, the overall bandwidth resources and left bandwidth resources capable of bearing extra service becoming 0, and the unprotected overall bandwidth resources and left bandwidth resources all becoming 56*VC4 (the original unprotected bandwidth resources of 48*VC4 in bandwidth on the TE link left available unprotected bandwidth resources).

Nodes P32 and P33 determines that the information update related to the relevant TE link P320-P33 is: 1:1 protected overall bandwidth resources and left bandwidth resources becoming 0, the overall bandwidth resources and left bandwidth resources capable of bearing extra service becoming 0, and the unprotected overall bandwidth resources becoming 8*VC4 and left bandwidth resources becoming 7*VC4. 1*VC4 unprotected bandwidth bears services on LSP1, and then the protection attribute with MSP 1 traversed by LSP 1 becomes unprotected.

Nodes P33 and P30 determines that the information update related to the relevant TE link P33-P30 is: 1:1 protected overall bandwidth resources and left bandwidth resources becoming 0, the overall bandwidth resources and left bandwidth resources capable of bearing extra service becoming 0, and the unprotected overall bandwidth resources and left bandwidth resources all becoming 8*VC4. In the network, the TE link information not traversed by multiplex section ring MSP 1 is not affected by the failure of MSP 1.

After determining the changed TE link resource information as described above, P30, P31, P32 and P33 distribute the left bandwidth resource information of the new TE link to other nodes or PCE nodes in the network. Finally, a new TE link resource information table in case of a failure in MSP 1 will form as shown in the following table 3.

Table 3 is a TE link resource information table in case of a failure according to the first embodiment.

| TE link ID | TE link protection resource type | overall bandwidth | left bandwidth value |
|---|---|---|---|
| PE10-P30 | unprotected resources | 16*VC4 (or 16*155M) | 16*VC4 |
| PE10-P33 | unprotected resources | 16*VC4 | 15*VC4 |
| P30-P33 | 1:1 protected resources | 0 | 0 |
| | extra service resources | 0 | 0 |
| | unprotected resources | 8*VC4 | 8*VC4 |
| P30-P31 | 1:1 protected resources | 0 | 0 |
| | extra service resources | 0 | 0 |
| | unprotected resources | 8*VC4 | 8*VC4 |
| P31-P32 | 1:1 protected resources | 0 | 0 |
| | extra service resources | 0 | 0 |
| | unprotected resources | 56*VC4 | 56*VC4 |
| P32-P33 | 1:1 protected resources | 0 | 0 |
| | extra service resources | 0 | 0 |
| | unprotected resources | 8*VC4 | 7*VC4 |
| PE20-P31 | unprotected resources | 16*VC4 | 16*VC4 |
| PE20-P32 | unprotected resources | 16*VC4 | 15*VC4 |

In the first embodiment, the 2-fiber bidirectional multiplex section ring configuration for SDH is described. Actually, the configuration of 2-fiber bidirectional multiplex section ring in SONET/OTN may also be handled as in the first embodiment 1. Similarly, the RPR ring protection configuration technique used in the packet switching network may also be handled as in the first embodiment.

The method of the present invention is described as following in the mode that relate nodes process TE link information when a TE link related to protection configuration in the network fails.

For the configuration of 4-fiber bidirectional multiplex section ring protection in the SDH/SONET/OTN network, a TE link configured with a 4-fiber bidirectional multiplex section ring protection has recourses of enhanced protection attribute, and resources of extra service protection attribute in the initialization. Under common conditions, a pair of main fiber on the multiplex section ring for bearing the main service is different from another pair of standby fiber for protection in the path taken. When the main fiber on the 4-fiber bidirectional multiplex section ring fails, the main service is segment-switched onto the standby fiber. Then, the resource information of the TE link broken on the multiplex section ring has resources with 1:1 protection attribute, enhanced service resources and extra service resources all becoming 0. The resource information of the TE link with no interruption on the multiplex section ring has sources of the 1:1 protection attribute, sources of extra service protection attribute and sources of enhanced protection attribute becoming 0.

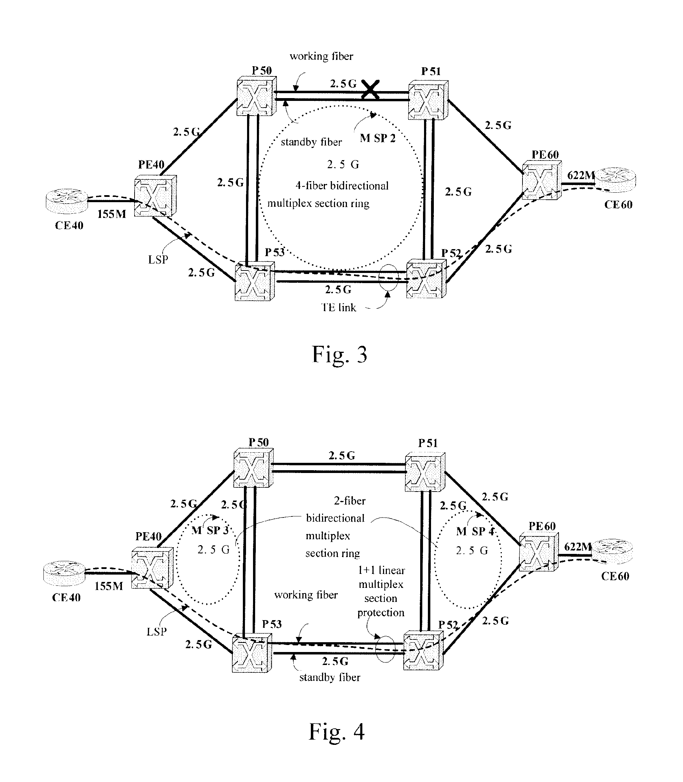

This present invention provides a second embodiment for the configuration of a four-fiber bidirectional multiplex section ring protection. The structure of the four-fiber bidirectional multiplex section ring configuration network in the second embodiment is shown in Figure 3.

In the network shown in Figure 3, MSP 2 is the configuration of a four-fiber bidirectional multiplex section ring. A working fiber and standby fiber between two nodes on the ring constitutes a TE link with a variety of protection attributes. After establishing an LSP of 1*VC4 in bandwidth between PE40 and PE60 by using link resources with the enhanced protection attribute on MSP 2, a network node obtains TE link information with a variety of protection attributes, binds the TE link information together according to the mode shown in table 1, and distributes the bound TE link information to other nodes or PCE nodes in the network. After TE link information between network nodes are distributed, a TE link resource information table of the whole network shown in the following table 4 is formed in each network node of the transport network, or PCE node.

Table 4 is a TE link resource information table of the whole network according to the second embodiment.

| TE link ID | TE link protection resource type | overall bandwidth | left bandwidth value |
|---|---|---|---|
| PE40-P50 | unprotected resources | 16*VC4 | 16*VC4 |
| PE40-P53 | unprotected resources | 16*VC4 | 15*VC4 |
| P50-P53 | enhanced protected resources | 16*VC4 | 16*VC4 |
| | extra service resources | 16*VC4 | 16*VC4 |
| P50-P51 | enhanced protected resources | 16*VC4 | 16*VC4 |
| | extra service resources | 16*VC4 | 16*VC4 |
| P51-P52 | enhanced protected resources | 16*VC4 | 16*VC4 |
| | extra service resources | 16*VC4 | 16*VC4 |
| P52-P53 | enhanced protected resources | 16*VC4 | 15*VC4 |
| | extra service resources | 16*VC4 | 16*VC4 |
| PE60-P51 | unprotected resources | 16*VC4 | 16*VC4 |
| PE60-P52 | unprotected resources | 16*VC4 | 15*VC4 |

In the network in Figure 3, when the working fiber between two nodes P50 and P51 on MSP 2 fails, all information borne on the working fiber bandwidth resource is switched in the way of segment protection onto the standby fiber bandwidth resources, and nodes on the MSP 2 ring determine a change in the resources of the relevant TE link.

P50 and P51 determine that the resource information of TE link P50-P51 becomes: the resource bandwidth of the 1:1 protection attribute being 16*VC4, and enhanced service resources and extra service resources all becoming 0.

P51 and P52 determine that the resource information of TE link P51-P52 becomes: the resource bandwidth of the 1:1 protection attribute being 16*VC4, extra service left bandwidth resources being 16VC4, and enhanced service resources left bandwidth becoming 0.

P52 and P53 determine that the resource information of TE link P52-P53 becomes: the resource bandwidth of the 1:1 protection attribute being 15*VC4, extra service left bandwidth resources being 16VC4, and enhanced service resource bandwidth becoming 0.

P53 and P50 determine that the resource information of TE link P53-P50 becomes: the resource bandwidth resource of the 1:1 protection attribute being 16*VC4, extra service left bandwidth resources being 16VC4, and enhanced traffic left bandwidth resources becoming 0.

Nodes PE40 and PE60 not related to the multiplex section ring are determined not to be affected by the failure of MSP 2. Therefore, the resource information of nodes PE40 and PE60 does not change. After the nodes on MSP 2 ring all determine the changed TE link information, they bind the updated TE link information together in the way shown in the above table 1, and issue the bound TE link information to other nodes or the PCE nodes in the network. After TE link between network nodes is distributed, a TE link resource information table of the whole network as shown in the following table 5 is formed in each of the network nodes or PCE nodes in the transport network.

Table 5 is an updated TE link resource information table of the whole network in case of a failure according to the second embodiment.

| TE link ID | TE link protection resource type | overall bandwidth value | left bandwidth value |
|---|---|---|---|
| PE40-P50 | unprotected resources | 16*VC4 | 16*VC4 |
| PE40-P53 | unprotected resources | 16*VC4 | 15*VC4 |
| P50-P53 | enhanced protected resources | 0 | 0 |
| | 1:1 protected resources | 16*VC4 | 16*VC4 |
| | extra service resources | 16*VC4 | 16*VC4 |
| P50-P51 | enhanced protected resources | 0 | 0 |
| | 1:1 protected resources | 16*VC4 | 16*VC4 |
| | extra service resources | 0 | 0 |
| P51-P52 | enhanced protected resources | 0 | 0 |
| | 1:1 protected resources | 16*VC4 | 16*VC4 |
| | extra service resources | 16*VC4 | 16*VC4 |
| P52-P53 | enhanced protected resources | 0 | 0 |
| | 1:1 protected resources | 16*VC4 | 15*VC4 |
| | extra service resources | 16*VC4 | 16*VC4 |
| PE60-P51 | unprotected resources | 16*VC4 | 16*VC4 |
| PE60-P52 | unprotected resources | 16*VC4 | 15*VC4 |

The second embodiment is described as following when the protection configuration among a group of nodes changes.

For the network in normal operation, according to the actual distribution of network services or as required for network maintenance, an operator might make an online adjustment of the protection configuration in the network, for example, deletes multiplex section ring configuration, adds linear multiplex section protection configuration, etc. After the protection is re-configured among a group of nodes in the network, nodes traversed by the protection configuration can determine a partial of or all protection attributes and bandwidth information of the changed resources of the TE link, and distribute the updated TE link resource information in the network. The network may establish an LSP connection with the updated TE link resource information.

For example, in the network shown in Figure 3, the operator reconfigures the protection configuration corresponding to the Figure 3 according to the actual service bearing capability of the network. The 4-fiber bidirectional multiplex section ring configuration among P50, P51, P52 and P53 is deleted, a 1+1 linear multiplex section configuration is added between nodes P53 and P52, a 2-fiber bidirectional multiplex section ring configuration is added among nodes PE40, P50 and P53, and a 2-fiber bidirectional multiplex section ring configuration is added among nodes PE60, P51 and P52. The network with the above change in protection configuration is shown in Figure 4.

In the network shown in Figure 4, according to the changed protection configuration,

Nodes PE40 and P53 determine that TE link PE40-P53 changes from bandwidth resources having the attribute with no protection to bandwidth resources having the 1:1 protection attribute and being capable of bearing extra service.

Nodes PE40 and P50 determine that TE link PE40-P50 changes from bandwidth resources having the attribute with no protection to bandwidth resources having the 1:1 protection attribute and being capable of bearing extra service.

Nodes PE50 and P53 determine that TE link PE50-P53 changes from bandwidth resources having the enhanced protection attribute and being capable of bearing extra services to bandwidth resources having the 1:1 protection, bandwidth resources with no protection attribute, and bandwidth recourses being capable of bearing extra services.

Nodes PE50 and P51 determine that TE link PE50-P51 changes from bandwidth resources having the enhanced protection attribute and being capable of bearing extra services to bandwidth resources having the attribute with no protection.

Nodes PE51 and P52 determine that TE link PE51-P52 changes from bandwidth resources having the enhanced protection attribute and being capable of bearing extra services to bandwidth resources having the 1:1 protection, bandwidth resources with no protection attribute, and bandwidth recourses capable of bearing extra services.

Nodes PE52 and P53 determine that TE link PE52-P53 changes from bandwidth resources having the enhanced protection attribute and being capable of bearing extra services to bandwidth resources having the 1+1 protection attribute.

Nodes PE60 and P51 determine that TE link PE60-P51 changes from bandwidth resources with no protection attribute to bandwidth resources with the 1:1 protection attribute and bandwidth recourses capable of bearing extra service.

Nodes PE60 and P52 determine that TE link PE60-P52 changes from bandwidth resources having the attribute with no protection to bandwidth resources having the 1:1 protection attribute and bandwidth recourses capable of bearing extra service.

After a node in the network determines the change in the relevant TE link resource information, it issues the new TE link resource information as changed to other nodes or PCE nodes in the network. Finally, in the nodes or PCE nodes in the network an updated TE link resource information table of the whole network as shown in the following table 6 is formed. Upon the receipt of an external connection establishment request, a node in the network may then determine and establish a corresponding LSP connection by using the TE link resource information contained in the updated TE link resource information table of the whole network as shown in table 6.

Table 6 is an updated TE link resource information table with a change in TE link resource information according to the second embodiment.

| TE link ID | TE link protection resource type | overall bandwidth value | left bandwidth value |
|---|---|---|---|
| PE40-P50 | 1:1 protected resources | 8*VC4 | 8*VC4 |
| | extra service resources | 8*VC4 | 8*VC4 |
| PE40-P53 | 1:1 protected resources | 8*VC4 | 7*VC4 |
| | extra service resources | 8*VC4 | 8*VC4 |
| P50-P53 | 1:1 protected resources | 8*VC4 | 8*VC4 |
| | unprotected resources | 16*VC4 | 16*VC4 |
| | extra service resources | 8*VC4 | 8*VC4 |
| P50-P51 | unprotected resources | 32*VC4 | 32*VC4 |
| P51-P52 | 1:1 protected resources | 8*VC4 | 8*VC4 |
| | unprotected resources | 16*VC4 | 16*VC4 |
| | extra service resources | 8*VC4 | 8*VC4 |
| P52-P53 | 1+1 protected resources | 16*VC4 | 15*VC4 |
| PE60-P51 | 1:1 protected resources | 8*VC4 | 8*VC4 |
| | extra service resources | 8*VC4 | 8*VC4 |
| PE60-P52 | 1:1 protected resources | 8*VC4 | 7*VC4 |
| | extra service resources | 8*VC4 | 8*VC4 |

The first and second embodiments are mainly described according to the multiplex section ring configuration and linear multiplex section ring configuration. For the RPR ring protection configuration in the packet network, TE link information may be handled in the mode same as or close to that in the 2-fiber bidirectional multiplex section ring protection configuration in the SDH network.

The foregoing are only exemplary embodiments of the present invention. The protection scope of the present invention, however, is not limited to the above description. Any alteration or substitution that is within the technical scope disclosed by the present invention and can easily occur to those skilled in the art should be covered in the protection scope of the present invention. Therefore, the protection scope of the present invention should be determined by the statements in Claims.

## Claims

1. A method for processing Traffic Engineering, TE, link resource information, comprising:
obtaining, by a network node, a variety of protection attributes possessed by a TE link and bandwidth resource information of the protection attributes; and
distributing, by the network node, the obtained protection attributes possessed by the TE link and the bandwidth resource information of the protection attributes in the network.

2. The method of claim 1, wherein obtaining, by the network node, the variety of protection attributes possessed by the TE link and the bandwidth resource information of the protection attributes comprises:
obtaining, by the network node, the variety of protection attributes possessed by the TE link between the network node and other network nodes and the bandwidth resource information of the protection attributes after at least one protection ability has been configured on the TE link between the network node and other network nodes.

3. The method of claim 2, wherein obtaining, by the network node, the variety of protection attributes possessed by the TE link and the bandwidth resource information of the protection attributes comprises:
obtaining, by an affected network node, the information with protection attributes of the TE link changed when the network fails; and
re-obtaining, by the affected network node, a variety of protection attributes possessed by the TE link and bandwidth resource information of the protection attributes.

4. The method of claim 2, wherein obtaining, by the network node, the variety of protection attributes possessed by the TE link and the bandwidth resource information of the protection attributes comprises:
obtaining, by the network node, information with the protection attributes of the TE link changed after reconfiguring the at least one protection ability of the TE link between the network node and another network node; and
re-obtaining, by the network node, a variety of protection attributes possessed by the TE link and bandwidth information of the protection attributes.

5. The method of claim 2, wherein obtaining, by the network node, the variety of protection attributes possessed by the TE link and the bandwidth resource information of the protection attributes comprises:
re-obtaining, by the network node, left bandwidth resource information of the TE link when part of bandwidth resources of the TE link are used for bearing a specific service.

6. The method of claim 2, wherein the protection ability comprises: linear multiplex section protection, multiplex section ring protection or resilient packet ring protection.

7. The method of any of claims 1-6, wherein distributing, by the network node, the obtained protection attributes possessed by the TE link and the bandwidth resource information of the protection attributes comprises:
binding, by the network node, the obtained protection attributes possessed by the TE link and the bandwidth resource information of the protection attributes together; and
distributing the bound protection attributes and bandwidth resource information to at least one of other network nodes and Path Calculation Elements, PCE, in the network.

8. The method of claim 7, wherein distributing, by the network node, the obtained protection attributes possessed by the TE link and the bandwidth resource information of the protection attributes comprises:
obtaining, by the at least one of other network nodes and the PCEs, TE link resource information of the network according to the received protection attributes possessed by the TE link and the bandwidth resource information of the protection attributes which are distributed by the network nodes.

9. The method of claim 8, wherein distributing, by the network node, the obtained protection attributes possessed by the TE link and the bandwidth resource information of the protection attributes when a service connection is established comprises:
establishing, by the other network nodes, the service connection according to the obtained TE link resource information of the network and a received connection establishment request; or
sending, by the other network nodes, a request for establishing a Label Switched Path, LSP, connection to the PCE according to the received connection establishment request, and establishing the service connection through a signaling process according to path information returned by the PCE.

10. The method of claim 1, wherein the network is: Generalized Multi-Protocol Label Switching, GMPLS, network or Multi-Protocol Label Switching, MPLS, network.

11. A network node, comprising:
an information acquirement module, configured to obtain a variety of protection attributes possessed by a TE link and bandwidth resource information of the protection attributes; and
an information publication module, configured to distribute the protection attributes possessed by the TE link and the bandwidth resource information of the protection attributes which are both received from the information acquirement module in the network.
